# EUROPÄISCHE PATENTSCHRIFT

(11) **EP 0 621 331 B1**
(45) Veröffentlichungstag und Bekanntmachung des Hinweises auf die Patenterteilung: **24.06.1998**
(21) Anmeldenummer: 94250106.5
(22) Anmeldetag: 22.04.1994
(51) Int. Cl.: C10B 53/00, C10B 7/00

(54) **Verfahren zur Verkokung von Altreifengranulat, insbesondere zur Herstellung eines aktiven Filtermateriales**
Process for coking scraptire granules particularly for the production of a filtering material
Procédé de cokéfaction de granules de pneus usagés plus particulièrement pour la production d'un matériau filtrant

(30) Priorität: 23.04.1993 DE 4314011
(43) Veröffentlichungstag der Anmeldung: 26.10.1994
(73) Patentinhaber: Nagel, Reinhard, D-12249 Berlin (DE)
(72) Erfinder: Nagel, Reinhard, D-12249 Berlin (DE)
(74) Vertreter: Lüke, Dierck-Wilm, Dipl.-Ing.

(56) Entgegenhaltungen:
- DE-C- 466 996
- DE-C- 635 098
- DE-C- 3 819 699
- US-A- 3 875 077
- PATENT ABSTRACTS OF JAPAN vol. 17, no. 102 (C-1031) 2. März 1993 & JP-A-04 292 409 (KANKIYOU RISAACHI) 16. Oktober 1992

## Beschreibung

Die Erfindung bezieht sich auf ein Verfahren zur Verkokung von Altreifengranulat, insbesondere zur Herstellung eines aktiven Filtermateriales.

Ein Verfahren der gattungsgemäßen Art ist aus der US-A- 3,875,077 vorbekannt. Bei der Durchführung des Verfahrens wird das Altreifengranulat zunächst in einem Ofen einer Pyrolyse bei einer Temperatur von etwa 800 °C in einer Atmosphäre unter Luftabschluß ausgesetzt, um die Karbonisierung zu bewirken. Die Kohle wird dann durch den Kontakt mit Dampf oder gasförmiger Kohlensäure bei Temperaturen zwischen 900 und 1000 °C aktiviert. Nachteilig sind die hohen Temperaturen des Verfahrens zur Verkokung von Altreifengranulat. Dieses Verfahren hat sich auch im praktischen Einsatz nicht bewährt, da keine vollständige umweltfreundliche Entsorgung der Altreifen ermöglicht wird.

Verfahren zur Verkokung von Altreifengranulat sind auch aus DE-A- 28 18 851 und JP-A- 59-199 772 vorbekannt. Nachteilig ist, daß hierbei nur Ruß erzeugt wird, der nicht als aktives Filtermateral verwendbar ist.

Der Erfindung liegt die Aufgabe zugrunde, ein verbessertes Verfahren zur Verkokung von Altreifengranulat, insbesondere zur Herstellung eines aktiven Filtermateriales, zu schaffen.

Zur Lösung dieser Aufgabe sieht die Erfindung vor, daß in einer ersten Stufe die flüchtigen Kohlenwasserstoffverbindungen und Schwefel in einer Stickstoffatmosphäre bei 200 bis 300 °C aus dem Granulat ausgetrieben werden und das so vorbehandelte Granulat in einer zweiten Stufe in einem vorgeheizten Stickstoffgas-Gegenstrom verkokt wird. Ausgangspunkt ist eine sinnvolle Verwendung von Altreifen, die in großen Mengen anfallen und häufig nur einer reinen Verbrennung zugeführt werden, die wiederum durch den hohen Anteil an Schwermetallen (Blei, Cadmium und Chrom) andere Probleme aufwirft. Nur ein kleiner Anteil der Altreifen wird der Granulierung zugeführt. Mit der Erfindung wird ein verbessertes Verfahren vorgeschlagen, mit dem durch Verkokung von Altreifengranulat ein aktives Filtermaterial erzeugt wird, das auf vielfältige Weise einsetzbar ist, z.B. zur Luft-, Boden- und Wasserreinhaltung. Das erfindungsgemäße Verfahren kommt aufgrund der Verwendung der Stickstoffatmosphäre mit weitaus geringeren Temperaturen zwischen 200 und 300 °C aus, so daß der Energieaufwand für die Durchführung des erfindungsgemäßen Verfahrens geringer ist, das somit das vorbekannte Verfahren zur Verkokung von Altreifengranulat wesentlich verbessert.

Die Behandlung des Altreifengranulates erfolgt erfindungsgemäß in mehreren, mindestens aber in zwei Stufen, wobei in der ersten Stufe in einem Drehrohrofen in einer Stickstoffatmosphäre bei 200° bis 300°C die flüchtigen Kohlenwasserstoffverbindungen und Schwefel aus dem Granulat ausgeschieden werden und dann in der zweiten Stufe das so vorbehandelte Granulat in einem dreistufigen System hintereinander angeordneter Doppelrohröfen, die das Granulat kontinuierlich durchwandert, in einem vorgeheizten Stickstoffgasgegenstrom verkokt wird. Die in der ersten Verfahrensstufe ausgetriebenen Kohlenwasserstoffverbindungen und der Schwefel werden einem Kaskadenreiniger zur Entstaubung und Schwefelrückgewinnung zugeführt. Mit dem erfindungsgemäßen Verfahren wird in vorteilhafter und umweltfreundlicher Weise ein vielseitig verwendbares aktives Filtermaterial erzeugt und damit ein Beitrag zur sinnvollen Nutzung des an sich lästigen Abfallmaterials Altreifen geleistet.

Das erfindungsgemäße Verfahren ist nachstehend anhand einer zu seiner Durchführung geeigneten Vorrichtung näher beschrieben. Es zeigen:

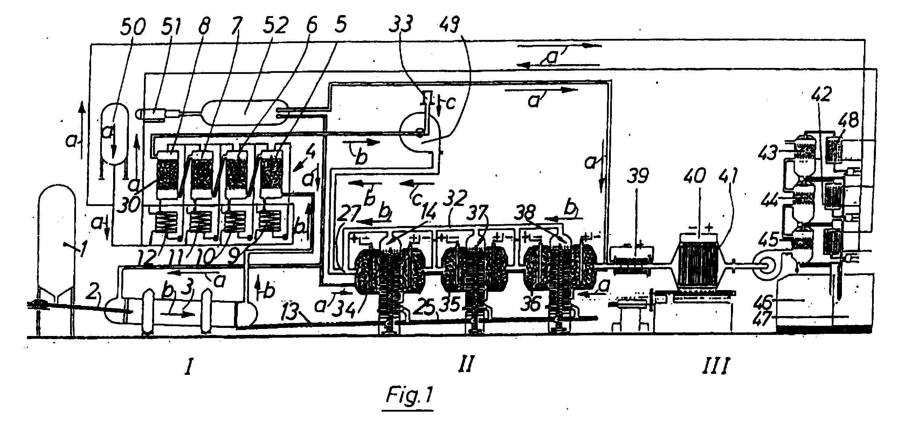

- Fig. 1: den prinzipiellen Aufbau der Vorrichtung und
- Fig. 2: einen Doppelrohrofen der Vorrichtung.

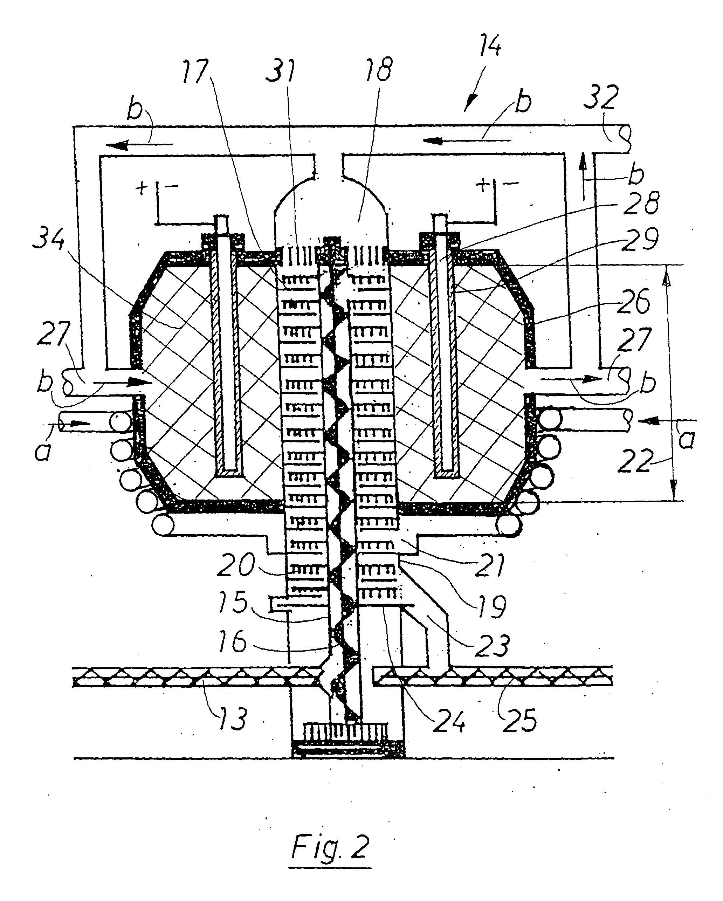

Das Altreifengranulat gelangt in der ersten Stufe I aus einem Silo 1 über eine Förderschnecke 2 in einen Drehrohrofen 3, in dem das Granulat einer Stickstoffatmosphäre bei 200° bis 300°C ausgesetzt wird. Dabei werden die flüchtigen Kohlenwasserstoffverbindungen sowie freier und zum Teil gebundener Schwefel ausgetrieben, der aus dem Vulkanisationsprozeß der Reifen stammt. In der ersten Stufe I werden die Kohlenwasserstoffverbindungen und der Schwefel einem vierstufigen Kaskadenreiniger 4 zur Entstaubung und Schwefelrückgewinnung zugeführt. Die einzelnen Kaskaden 5,6,7,8 sind mit je einem Edelstahlwendelbett 30 versehen und können trocken oder naß oder in kombinierter Weise betrieben werden und sind beheizbar. Das im Drehrohrofen 3 vorbehandelte Granulat gelangt über die Förderschnecke 13 in die zweite Stufe II, ein dreistufiges System von hintereinander angeordneten Doppelrohröfen 14,37, 38, von denen der Doppelrohrofen 14 in Fig. 2 näher dargestellt ist.

In einem senkrechten Innenrohr 15 des Doppelrohrofens 14 ist eine Förderschnecke 16 angeordnet, die das Granulat in den oberen Teil 18 des Doppelrohrofens 14 transportiert. Am Ende der Förderschnecke 16 findet der Austrag des Granulats auf Schlitzböden 17 eines Mantelrohres 19 statt. Außer der senkrechten Förderschnecke 16 dreht sich auch das Innenrohr 15, an dessen Außenwand Kamm-Mitnehmer 20 vorgesehen sind, die zwischen den einzelnen Schlitzböden 17 für eine gute Durchmischung des Granulats sorgen. In einem der unteren Schlitzböden 17 wird in einem Einlaß 21 vorgeheiztes Stickstoffgas (Pfeil a) eingespeist, das die bei der Verkokung des Granulats entstehenden Gase unter Aufwirbelung des Granulats in den oberen Teil 18 des Doppelrohrofens 14 transportiert. Das Granulat durchwandert von Schlitzboden 17 zu Schlitzboden 17 jeweils eine aktive Heizzone 22 pro Doppelrohrofen 14,36,37 und gelangt schließlich an einen Auslaß 23 an der Bodenplatte 24 und über eine weitere Transportschnecke 25 in den nächsten, höhertemperierten Doppelrohrofen 37, 38.

Die Heizzonen 22 befinden sich in ringförmigen Erweiterungen 26 eines horizontal gelegten Rauchgaskanales 27, der an den äußeren Mantelrohren 19 der Doppelrohröfen 14,37,38 verschweißt ist und einen Kranz von zwölf temperaturgesteuerten Heizstäben 28 in Keramikschutzhülsen 29 und ein Edelstahlwendelbett 34,35,36 aufnimmt. Die Temperatursteuerung wird wahlweise durch eine Stufenregelung der Heizstäbe 28 bis zur Weißglut des Edelstahlwendelbettes 34,35,36 geregelt. Die in der aktiven Heizzonen 22 der Doppelrohröfen 14,37,38 entstehenden Abgase werden über Siebplatten 31 im oberen Teil 18 der Doppelrohröfen 14,37,38 mit dem Stickstoffstrom (Pfeil a) über eine Abgasrückführungsleitung 32 an den Anfang des Rauchgaskanals 27 abgesaugt. Hier kommt es zu einer angestrebten Vereinigung der Abgase (Pfeil b) aus der ersten Verfahrensstufe I und der zweiten Verfahrensstufe II. Den vereinigten Abgasmengen wird über eine Bypaßregelung 33 ein von einem Gebläse 49 angesaugter Luftstrom (Pfeil c) zugeführt und über den Rauchgaskanal 27 durch die drei hintereinander liegenden, unterschiedlich beheizten Edelstahlwendelbetten 34,35,36 getrieben, die bis zur Weißglut betrieben werden können. An diesen verbrennen mit Hilfe des zugeführten Luftsauerstoffanteils die im Abgas (Pfeil b) vorhandenen Abriebfeinstäube und flüchtigen Teerfraktionen. Anorganische Stäube scheiden an den Elektroden 41 eines Elektrofilters 40 aus dem Rauchgas (Pfeil b) aus.

Um Risikoverbindungen wie Polycyclen, Biphenyle und Dioxine ganz sicher auszuschließen, ist in einer dritten Stufe III eine Keramikhochtemperaturstrecke 39 vorgesehen, deren Temperaturmaximum bei 2000°C liegt. Nach einem Wärmetauscher, der aus gekühlten Hohlelektroden (Kondensatabscheider) besteht und im letzten Drittel des Elektrofilters 40 angeordnet ist, bildet ein dreistufiger, in vertikaler Anordnung aufgebauter Absorptionswäscher 42 das Endglied der Vorrichtung. In den drei Absorptionszellen 43,44,45 des Absorptionswäschers 42 werden die gasförmigen Schadstoffe aus dem Verkokungsprozeß mit Hilfe von wässrigen, gekühlten Absorptionslösungen, z.B. Calciumhydroxidlösung, chemisch gebunden und in einen Vorratsbehälter 46 mit der inaktiven Waschlösung ausgetragen.

Für die Kühlung der Absorptions- und/oder Adsorbtionslösungen des Prozesses im Kaskadenreiniger 4 und im dreistufigen Absorptionswäscher 42 ist flüssiger Stickstoff vorgesehen, der sich in einem Tank 50 befindet. Die Kühlsysteme 9,10,11,12 im Kaskadenreiniger 4 und im Kühlssystem 48 des dreistufigen Absorptionswäschers 42 dienen gleichzeitig als Verdampfer zur Erzeugung im Verfahren benötigten Stickstoffgases, das ein über den Kühlsystemen 9,10,11,12 angeordneter Kompressor 51 absaugt und in einem Druckkessel 52 auf konstantem Betriebsdruck hält. Die Bevorratung der Absorptionslösung für den Absorptionswäscher 42 erfolgt in einem Lösungsmitteltank 47.

### BEZUGSZEICHENLISTE

- 01: Silo
- 02: Förderschnecke
- 03: Drehrohrofen
- 04: Kaskadenreiniger
- 05: Kaskade
- 06: Kaskade
- 07: Kaskade
- 08: Kaskade
- 09: Kühlsystem
- 10: Kühlsystem
- 11: Kühlsystem
- 12: Kühlsystem
- 13: Förderschnecke
- 14: Doppelrohrofen
- 15: Innenrohr
- 16: Förderschnecke
- 17: Schlitzboden
- 18: oberer Teil
- 19: Mantelrohr
- 20: Kamm-Mitnehmer
- 21: Einlaß
- 22: Heizzone
- 23: Auslaß
- 24: Bodenplatte
- 25: Transportschnecke
- 26: Erweiterung
- 27: Rauchgaskanal
- 28: Heizstab
- 29: Keramikschutzhülse
- 30: Edelstahlwendelbett
- 31: Siebplatte
- 32: Abgasrückführungsltg.
- 33: Bypaßregelung
- 34: Edelstahlwendelbett
- 35: Edelstahlwendelbett
- 36: Edelstahlwendelbett
- 37: Doppelrohrofen
- 38: Doppelrohrofen
- 39: Keramikhochtemperaturstrecke
- 40: Elektrofilter
- 41: Elektrode
- 42: Absorptionswäscher
- 43: Absorptionszelle
- 44: Absorptionszelle
- 45: Absorptionszelle
- 46: Vorratsbehälter
- 47: Absorptionszelle
- 48: Kühlsystem
- 49: Gebläse
- 50: Tank
- 51: Kompressor
- 52: Druckkesssel

- a: Stickstoff
- b: Rauchgas
- c: Luft

## Patentansprüche

1. Verfahren zur Verkokung von Altreifengranulat, insbesondere zur Herstellung eines aktiven Filtermateriales, **dadurch gekennzeichnet**, daß in einer ersten Stufe (I) die flüchtigen Kohlenwasserstoffverbindungen und Schwefel in einer Stickstoffatmosphäre bei 200° bis 300°C aus dem Granulat ausgetrieben werden und daß das so vorbehandelte Granulat in einer zweiten Stufe (II) in einem vorgeheizten Stickstoffgas-Gegenstrom verkokt wird.

2. Verfahren nach Anspruch 1, dadurch gekennzeichnet, daß die erste Stufe (I) in einem Drehrohrofen (3) und die zweite Stufe (II) in vom Granulat kontinuierlich durchwanderten, hintereinander angeordneten Doppelrohröfen (14,37,38) durchgeführt werden.

3. Verfahren nach Anspruch 2, dadurch gekennzeichnet, daß die in der ersten Stufe (I) aus dem Granulat ausgetriebenen Kohlenwasserstoffverbindungen und der Schwefel einem Kaskadenreiniger (4) zugeführt werden.

4. Vorrichtung zur Durchführung des Verfahrens nach einem der Ansprüche 1 bis 3, dadurch gekennzeichnet, daß der Doppelrohrofen (14,37,18) aus einem drehbaren, senkrechten Innenrohr (15) mit einer darin angeordneten drehbaren Förderschnecke (16) und auf der Außenwand angeordneten Kamm-Mitnehmern (20) sowie einem äußeren Mantelrohr (19) mit inneren Schlitzböden (17), zwischen denen die Kamm-Mitnehmer (20) angeordnet sind, und einer an das äußere Mantelrohr (19) angeschweißten ringförmigen Erweiterung (26) eines horizontalen Rauchgaskanals (27) gebildet ist, die von einem Edelstahlwendelbett (34,35,36) ausgefüllt und mit temperaturgesteuerten Heizstäben (28) in Keramikschutzhüllen (29) versehen sind.

5. Vorrichtung nach Anspruch 4, dadurch gekennzeichnet, daß im oberen Teil der Doppelrohröfen (14,37,38) Siebplatten (31) zur Abgasführung angeordnet sind.

6. Vorrichtung nach Anspruch 4, dadurch gekennzeichnet, daß dem ersten Doppelrohrofen (14) ein über eine Förderschnecke (13) an das Innenrohr (15) angeschlossener Drehrohrofen (3) vorgeschaltet und ein über einen Auslaß (23) des äußeren Mantelrohres (19) angeschlossener weiterer Doppelrohrofen (37,38) nachgeschaltet sind.

## Claims

1. A process for coking scraptire granules particularly for the production of an active filtering material, characterised by that in a first step (I) the volatile hydrocarbon compositions and sulphur are driven out from the granule in a nitrogen atmosphere at 200°C to 300°C, and that the thus pretreated granule is coked in a second step (II) in a pre-heated nitrogen gas counter-flow.

2. A process according to claim 1, characterised by that the first step (I) is executed in a revolving tubular furnace (3), and the second step (II) in double tubular furnaces (14, 37, 38) continuously passed by the granule and disposed one behind the other.

3. A process according to claim 2, characterised by that the hydrocarbon compositions driven out from the granule in the first step (I) and the sulphur are fed to a cascade cleaner (4).

4. A device for carrying out the process according to one of claims 1 to 3, characterised by that double tubular furnace (14, 37, 18) is formed of a rotatable vertical internal tube (15) with a rotatable conveyer worm (16) arranged therein, and comb-type drive portions (20) disposed on the outside wall, and an external shell tube (19) having internal slotted bottoms (17), between which the comb-type drive portions (20) are disposed, and an annular widened portion (26) of a horizontal exhaust gas duct (27), said portion (26) being welded to external shell tube (19), filled by a helical stainless steel bottom (34, 25, 36) and provided with temperature-controlled heating rods (28) in ceramic protection sleeves (29).

5. A device according to claim 4, characterised by that in the upper part of double tubular furnaces (14, 37, 38) screen plates (31) for exhaust gas conduction are disposed.

6. A device according to claim 4, characterised by that upstream to first double tubular furnace (14) a revolving tubular furnace (3) connected by a conveyer worm (13) to internal tube (15), and downstream thereto another double tubular furnace (37, 38) connected by an outlet (23) of the external shell tube (19) are provided.

## Revendications

1. Procédé de cokéfaction de granules de pneus usagés, plus particulièrement pour la production d'un matériau filtrant,
caractérisé en ce qu'en une première étape (I) les hydrocarbures volatils et soufre sont éliminés du granule dans un atmosphère d'azote de 200 à 300°C, et en une deuxième étape (II) le granule ainsi prétraité est cokéfié dans un contre-courant de gaz d'azote préchauffé.

2. Procédé selon la revendication 1,
caractérisé en ce que la première étape (I) est exécutée dans un four tubulaire rotatif (3), et la deuxième étape est exécutée dans des fours à tubes doubles (14, 37, 38) arrangés l'un après l'autre et passés à courant continu par le granule.

3. Procédé selon la revendication 2,
caractérisé en ce que les hydrocarbures éliminés du granule en la première étape (I) et le soufre sont alimentés à un nettoyeur en cascade (4).

4. Dispositif pour l'exécution du procédé selon une des revendications 1 à 3,
caractérisé en ce que le four à tubes doubles (14, 37, 38) est formé d'un tube intérieur rotatif (15) vertical avec une transporteuse à vis sans fin (16) rotative arrangée là-dedans et des entraîneurs à peigne (20) arrangés sur le côté extérieur et un tube à chemise (19) extérieur ayant des fonds à fente (17) intérieurs, entre desquelles les entraîneurs à peigne (20) sont arrangés, et d'un élargissement annulaire (26) d'un canal des gaz de fumée (27) horizontal, ledit élargissement étant soudé au tube à chemise (19) extérieur, rempli d'un banc en spirale (34, 35, 36) d'acier fin et pourvu de cartouches chauffantes (28) à température contrôlée dans des enveloppes de protection en céramique (29).

5. Dispositif selon la revendication 4,
caractérisé en ce que dans la partie supérieure des fours à tubes doubles (14, 37, 38) des plaques perforées (31) pour la conduction des gaz de fumée sont prévues.

6. Dispositif selon la revendication 4,
caractérisé en ce qu'un four tubulaire rotatif (3) est raccordé en amont du four à tubes doubles (14) par l'intermédiaire d'une transporteuse à vis sans fin (13) au tube intérieur (15), et un autre four tubulaire rotatif (37, 38) est raccordé en aval de celui-ci par l'intermédiaire d'une sortie (23) du tube à chemise (19) extérieur.
